Europäisches Patentamt

European Patent Office

Office européen des brevets

(19)

(11) **EP 1 177 676 B1**

(12) **EUROPEAN PATENT SPECIFICATION**

(45) Date of publication and mention
of the grant of the patent:
**27.11.2002  Bulletin 2002/48**

(21) Application number: **99920482.9**

(22) Date of filing: **07.05.1999**

(51) Int Cl.⁷: **H04N 1/06**, H04N 1/04

(86) International application number:
**PCT/CA99/00421**

(87) International publication number:
**WO 00/072578 (30.11.2000 Gazette 2000/48)**

(54) **INTERNAL DRUM SCOPHONY RASTER RECORDING DEVICE**

INNENTROMMEL SCOPHONY-RASTERAUFZEICHNUNGSGERÄT

DISPOSITIF D'ENREGISTREMENT PAR LIGNE A TAMBOUR INTERIEUR DU TYPE SCOPHONY

(84) Designated Contracting States:
**CH DE FR GB IT LI**

(43) Date of publication of application:
**06.02.2002  Bulletin 2002/06**

(73) Proprietor: **Cymbolic Sciences Inc.**
**Bellingham, WA 98226 (US)**

(72) Inventor: **MONTGOMERY, Derek, G.**
**New Westminster, British Columbia V3L 5C (CA)**

(74) Representative: **Giles, Ashley Simon**
**Haseltine Lake & Co.,**
**Imperial House,**
**15-19 Kingsway**
**London WC2B 6UD (GB)**

(56) References cited:
**US-A- 3 590 248        US-A- 4 357 627**
**US-A- 5 196 949        US-A- 5 532 730**
**US-A- 5 923 359**

## Description

## Field

The present invention relates to an optical recording system used to impart a raster composed image on to a flexible photo-sensitive medium. Such recording devices are well known in the industry of photographic film recorders, for exposing either finished display materials or photo-tool masters. The photo-tools are used as an intermediary, to transfer images on to a secondary medium.

## Background of the Invention

The printing industry has gone through an evolution designed to speed up the printing process and at the same time to lower costs. The film transfer to plate scheme simply exposes light sensitive photographic film with light from a low power source and then uses the processed film to transfer the image to a plate. More efficient plate imaging methods led to the direct imaging of the plates themselves. Although still using relatively low power light sources, such methods required complex plate composition and processing chemistry, and hence a large expense for the plates themselves. In a drive to reduce plate costs, the industry moved to high power laser light sources as a means of thermally exposing the image on the plate. This class of media is composed of inexpensive coatings that require little or no processing to condition the plate surfaces for printing.

In general, raster recording devices are limited in their exposing power by the brightness of the optical source. This limitation is in contrast to a flood exposure system, used to photo-graphically transfer images from a master on to a secondary medium, in which the amount of light can be increased simply by increasing the size or number of sources. Ultimately, the exposing power of any optical system reaches a fundamental maximum, for a given source brightness, once the system aperture and field of view have been filled. Because the field of view of a raster recorder usually extends over only a very small fraction of the total image area, in many cases extending over only a single image pixel element, the maximum exposure limit can be restrictive in terms of exposing power.

In particular, the image transfer process is used in the production of lithographic printing plates. The photo-sensitive emulsions appropriate for coating conventional printing plates are based on photopolymerization reactions, which require high levels of ultra-violet exposure. The source power required to expose a conventional plate efficiently, with a raster film recorder, is prohibitive using present day technology. A transfer medium is therefore used, composed of silver-halide based emulsions which are much more sensitive to longer wavelength light and require significantly reduced levels of exposure to sensitize. After the image has been generated on the transfer medium, it is used as a photographic mask and copied by contacting it to the printing plate and providing exposure from a high intensity ultra-violet flood lamp.

Lasers are the favoured light source for many raster recording devices because of their inherent high brightness, but they are limited to known lasing materials which impose a number of design restrictions, such as the choice of available wavelengths. In particular, ultra-violet laser sources are much more difficult to manufacture, and are considerably more costly than longer wavelength lasers. Presently, semi-conductor lasers are the most commercially viable laser, in terms of cost per unit emitting power. However, they are only capable of emitting wavelengths in the near infra-red to red portion of the optical spectrum. For this reason, printing plate manufacturers have recently developed printing plates based on thermally induced material changes that are sensitive to high power, near-infra-red (NIR) exposure instead of ultra-violet.

The exposure mechanism of thermally induced media is fundamentally different than photo-polymer or silver-halide processes. The latter processes can integrate exposures without suffering significant reciprocity effects. The former utilize emulsions which react to the thermal load imparted by the exposure, and will undergo a permanent state change, such as ablation, only when a certain temperature threshold has been exceeded. If the thermal load is allowed to dissipate before the threshold has been reached, no change in the reactive material will occur. It is important to consider this effect when designing a raster optical recording system, because some architectures provide varying delays between adjacent lines of raster, which could result in exposure uniformity problems.

Semi-conductor lasers are characterized not only by their wavelength, but also by the form of the emitting aperture. In general, state of the art high power laser diode sources emit from a stripe aperture, which generates a single transverse mode from the width of the strip in one axis, and is multi-modal over its length. NIR lasers of equivalent power (approximately 5 watts), which produce a circular spot, are much more costly than such diode lasers. An example of high power lasers which emit a circular spot is known as a YAG (yttrium aluminum garnet) laser. The brightness of the laser diode is limited by material damage thresholds so that total power can only be increased by enlarging the emitting aperture. The aspect ratio of the emitting aperture can be varied, allowing an increase in total output power to be achieved by increasing the length of the strip rather than increasing its width. The resulting rotational asymmetry imposes restrictions on the design configuration of an efficient raster optical system.

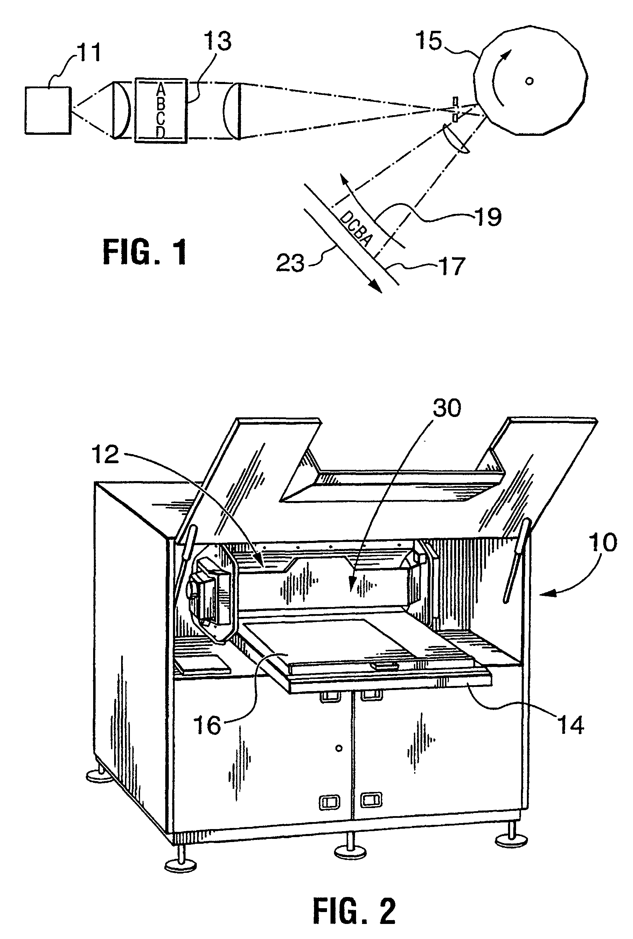

One method of recording high bandwidth and high resolution image data, using an optical source which is extended in one axis, was developed in the 1930's for television applications, and is referred to in the literature as "Scophony" projection. Referring to Figure **1**, the "Scophony" projection system employs an extended source **11** to illuminate an acousto-optic cell **13**, with the long axis of the source being parallel to the direction of acoustic propagation. The diffracted light from the acoustic cell **13** is focused on to the recording surface **17**, and the image of the acoustic amplitude can be resolved as it traverses the beam. The diffracted light beam is then scanned by mechanical means to sweep across the raster lines of the recording surface **17**, and is aligned so that the long axis of the imaged acoustic cell lies along the direction of scanning **19** on the recording surface **17**. If the velocity of the scan motion **19** at the recording surface **17** is equal in magnitude but opposite in direction to the velocity of the imaged acoustic motion **23**, the image pattern will remain stationary.

In the historical Scophony projection system the recording surface is a planar one and the scanner is a rotating cylinder having a plurality of elongated planar facets orientated parallel to the axis of the cylinder with the axis of the cylinder perpendicular to the direction of propagation of the incident beam. The scan motion produced by the rotating mirror facets is inherently non-linear because the angle of incidence at the recording plane vaires along the scan line. Complex corrective optics can be employed to partially compensate for the distortion, but they are expenisve and ultimately restrict the number of resovable pixel elements and the allowable source aperture aspect ratio.

There are many other optical system architectures used to record raster images on to flexible media. One such system is the internal drum scanning system in which a flexible medium is seated against an interior cylindrical mounting surface. A rotating optical element, usually a mirror or prism, which is disposed along the axis of the cylinder, redirects the modulated light beam radially with respect to the cylinder axis, scanning the beam along the cylinder circumference as it spins. The rotating scanner is translated by means of a mechanical carriage transport, which provides the slow scan axis of motion. Many machines in commercial production today employ this basic architecture in one form or another.

Another architecture is the external drum architecture in which a rotating drum carries a light sensitive plate or film clamped or otherwise held against its exterior surface. A writing head moves back and forth along the length of the drum and exposes pixels on the light sensitive recording medium. A major problem with such a system resides in the requirement of having to rotate a large drum, of considerable mass and rotational inertia, at the high speeds necessary to achieve fast recording rates (state of the art systems plot at raster rates in excess of 200 lines per second). Some external drum systems, overcome this problem by maintaining a relatively slow and manageable rotational rate, and exposing the medium with an array of modulated light sources. By recording multiple raster lines in parallel, a high pixel throughput can be maintained, but at the expense of increased system complexity and cost.

A major advantage of the internal drum configuration resides in the fact that it does not require the large mass associated with a drum to rotate. The relatively small axial scan mirror can be mounted directly on to a motor spindle and rotated at high speeds while still maintaining mechanical accuracy. In addition, the configuration does not have inherent distortion as does the planar recording projection system. The beam is directed through the central axis of the lens elements, and the distance to the recording plane is maintained constant throughout the scan motion. This results in a very simple, robust and inexpensive optical system.

However, a single faceted axial optical scanning element, used in an internal drum scanning system, causes the projected image at the recording plane to rotate about the optical axis as the beam scans along the cylinder circumference. If only circular symmetric, single spots are to be projected on to the recording plane, this rotation effect is unimportant. Therefore, circular beam lasers are the natural ones to use with an internal drum scanning system. For more complex systems which use non-rotationally symmetric optical sources, such as linear arrays, compensation is required. U.S. Patent No. 3,823,276 issued to Maslowski et al, discloses an optical data read system that projects an image of an array of spots from an inner cylinder surface on to a stationary CCD array. In order to compensate for the image rotation induced by the axial scanning element, a rotating dove prism is interposed in the beam path, and rotated at half the scan rate.

If an elongated source is introduced in an internal drum optical recorder, the rotation of the elongated image must be compensated for. This also can also be accomplished by means of a rotating prism synchronized to track the scan rotation. The phase of the rotation compensation can be adjusted to align the long axis with the scan axis, which is the required orientation for Scophony imaging. If the scan rates are tuned properly, the Scophony matching condition can be for a given acoustic rate and optical system magnification.

Accordingly, it is an object of the invention to provide an optical system, which can provide fast, accurate image recording with a relatively high power light source. It is a further object to provide a system which can accommodate a light source of asymmetric proportions, and is capable of exposing high quality raster images on flexible media. It is also an object of this invention to increase the exposing power of an internal drum raster recording device by increasing the extent of the source without degrading the image quality, by means of Scophony imaging. It is a particular object of this invention to facilitate the direct exposure of printing plates without the necessity of producing a transfer medium.

## SUMMARY OF THE INVENTION

According to the invention there is provided an optical recording and data processing system for exposing a raster image on to a flexible, light sensitive medium, which includes a medium holder having an inner cylindrical wall portion against which is held the medium, and a light source having an approximately rectangular emitting aperture, with a short aperture axis and a long aperture axis. A lens system collects the emitted light and projects a beam having a secondary beam waist which has a rectangular cross section with a long axis corresponding to the long aperture axis and a short axis corresponding to the short aperture axis. An optical modulator is aligned with the light source so as to intercept light at the secondary beam waist and produce a spatial modulation pattern across the long axis which shifts across the length of the long axis at a constant rate. A rotatable multiple beam deflector is positioned in the path of the beam and rotates so as to rotate the spatial modulation pattern at a constant rate. The modulated light beam is directed and focused onto a scanning deflector interposed along the axis of the cylindrical wall portion, such that after undergoing scan deflection, the light is focused onto the inner cylindrical recording surface. The focused light at the recording surface forms an image of the spatial modulation pattern. The scanning deflector scans the beam of light around the circumference of the inner cylindrical wall portion at a constant angular rate, equal to the rate of rotation of the spatial modulation pattern. The relative phase angle between rotation of the spatial modulation pattern and scan means is maintained such that the direction of movement of the projected image of the shifting modulation pattern is parallel to the scan motion, but opposite in direction. The velocity of scanning at the inner cylindrical recording surface is constant and maintained equal to the shifting velocity times the optical magnification between the modulator and the recording surface. A scanning deflector advancement assembly advances the scanning deflector along the cylinder axis, one pixel spacing for each scan rotation, to expose successive lines of raster and provide complete coverage of the raster image.

Alternatively, the extended source may modulated directly along its long aperture axis, and imaged on to the recording plane without the need for secondary relay optics and a modulator. This may be provided by an array of individual diode emitting elements that are modulated sequentially to produce a spatially shifting pattern.

The light source may be a laser diode.

The optical modulator may be an acousto-optic modulator.

The scanning defector may be an optical deflector rotatably disposed along the axis of the inner cylindrical wall portion so as to redirect light traveling along the axis approximately 90 degrees and normal to the light sensitive medium and to rotate the optical deflector about the axis at a constant rate and thereby provide optical scan coverage around the inner circumference of the inner cylindrical wall portion. Preferably, the optical deflector has a mirror surface at 45 degrees to the direction of incidence of light traveling along the axis.

The means for rotating the spatial modulation pattern may be a dove prism. Alternatively, a k-prism or a Paschen prism may be used. Such prisms will produce an image rotation rate equal to double the prism rotation rate. Therefore the prism must be rotated at the scan rotation rate to affect the image rotation compensation.

The optical recording and data processing system may include a flexible light recording sheet of material mounted against an inner cylindrical mounting surface, which includes a laser diode light source having a rectangular emitting aperture with a long axis and a short axis coupled to provide a beam with a secondary rectangular waist having short and long axes corresponding to the short and long axes of the aperture. An acousto-optic modulator crystal is positioned to intercept the light beam at the waist so that the long axis of the waist is parallel to the direction of acoustic propagation. The acoustic wave diffracts a fraction of the incident light by an amount which depends on the amplitude of the acoustic wave. The modulation of the acoustic wave pattern shifts across the long axis of the beam waist causing the diffracted light to be spatially modulated. A prism is positioned to intercept the light beam after modulation and to rotate the diffracted image from the modulator. After rotation by the prism, the light beam is directed along the axis of the cylindrical mounting surface on to a rotating-optical mirror surface oriented at 45 degrees to the beam axis, so as to deflect the light beam radially, and scan it along the inner circumference of the cylinder wall. The lens elements used for imaging the acousto-optic modulator plane on to the recording surface, are chosen to provide an optical magnification equal to the ratio between the acoustic velocity of the modulator crystal and the scan velocity.

## BRIEF DESCRIPTION OF THE DRAWINGS

The novel features believed characteristic of the invention are set forth in the appended claims. The invention itself, however, as well as other features and advantages thereof, will be best understood by reference to the detailed description which follows, read in conjunction with the accompanying drawings, wherein:

FIG. 1 is a schematic diagram of the original Scophony projection system for television applications.

FIG. 2 is a perspective frontal view of an internal drum opto-mechanical recorder showing the cylinder and micropositioner assembly and feed tray;

FIG. 3 is perspective rear view of the recorder showing the source optics assembly mounted on the rear of the cylinder;

FIG. 4 is elevation view of the spindle and scan mirror partly in section;

FIG. 5 is a plan view of the optical source assembly in accordance with the present invention showing the diode laser source, the acousto-optic modulator and the rotating dove prism;

FIG. 6 is a perspective rear view of the opto-mechanical recording system showing the optical source assembly, the scan mirror assembly and the inner cylinder;

FIG. 7 is a schematic diagram showing the rectangular beam waist or stripe at the acousto-optic modulator and at the image plane showing the direction of image shift within the stripe; and

FIG. 8 is a perspective view of an alternative light source consisting of individually addressable multiple laser diodes stacked in a linear array.

## DETAILED DESCRIPTION OF THE PREFERRED EMBODIMENT

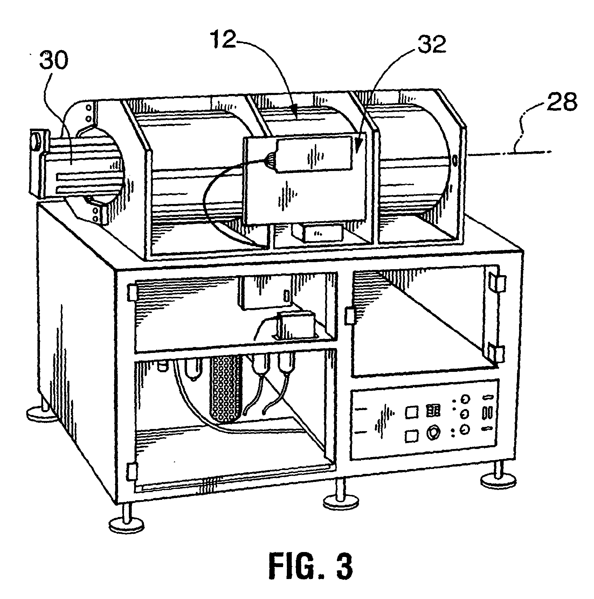

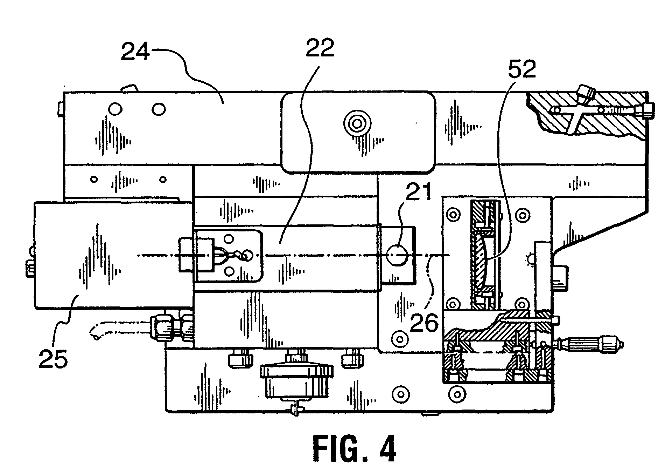

Referring to Figure 2, a general illustration of the opto-mechanical recording system 10, is comprised of a half cylinder 12 and attached feed tray 14 to permit transverse loading and unloading of the recording media 16. The recording medium 16 is flexible and held in place against the inner surface of the cylinder 12 by mechanical means or by vacuum applied through perforations (not shown) in the surface of cylinder 12. Referring to Figure 3 the rear of the system 10 discloses the cylinder 12 and location of a source optics assembly 32 adjacent thereto. A micropositioner assembly 30 positioned across the open face of the cylinder 12 is a mechanical drive system which translates the scan prism assembly 20 (see Figure 4) back and forth across the length of the cylinder 12.

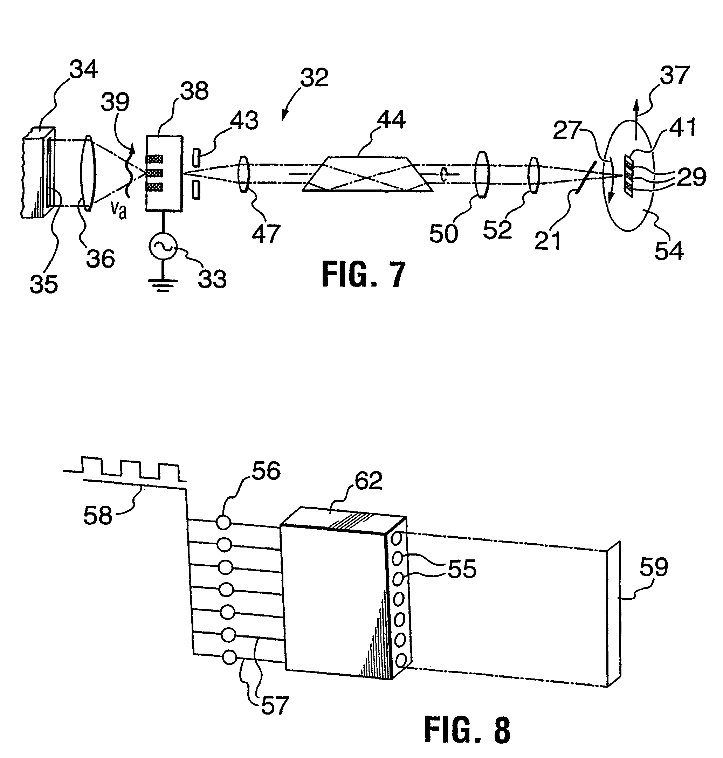

As shown in Figure 4, a single faceted scan prism assembly 20 is attached to a mechanical spindle 22, which, in turn, is mounted on a carriage 24, such that the spindle axis 26 is coincident with the cylinder axis 28 shown in Figure 3. The carriage 24 is part of the micropositioner assembly 30, which translates the scan prism assembly 20 back and forth across the length of the cylinder 12. The optical source assembly 32 is mounted on the back of the casting of cylinder 12, as shown in Figure 3. It modulates the light and generates a collimated beam which is directed at the scan mirror assembly 20 by two turning mirrors 51 and 53 (see Figure 7). A tachometer assembly 25 is coupled to spindle 22 and has an optical encoder (not shown) which measures the speed of rotation and phase of the rotating prism 21.

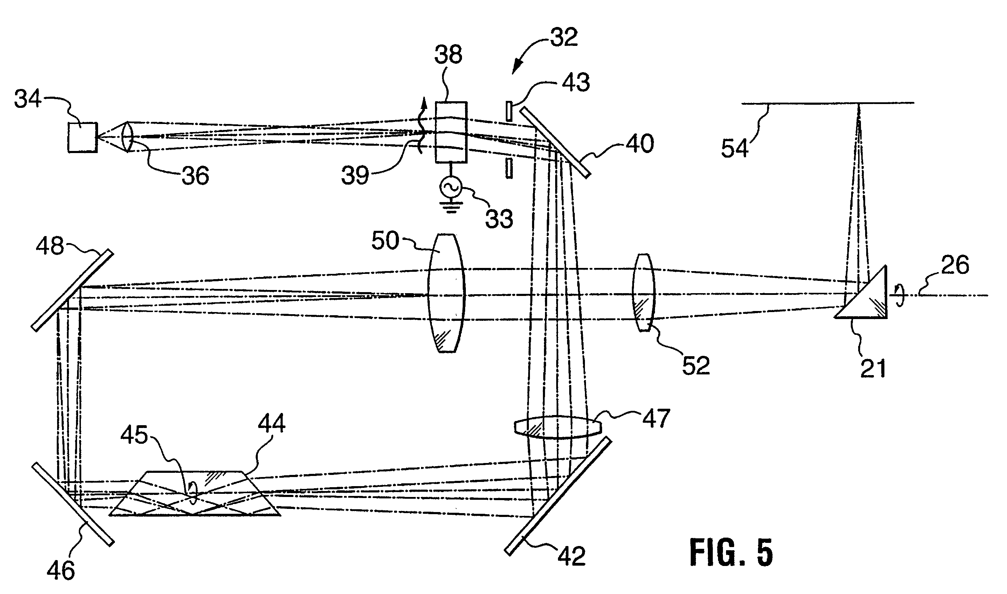

Referring now to Figure 5, the optical source assembly 32 has a laser diode assembly 34 which emits laser light through an elongated rectangular aperture 35 (see Figure 7). The emitted light passes through a source coupling optic lens 36 and is directed onto an acousto-optic modulator crystal 38 with the long axis of the beam waist in a direction parallel to the direction of travel of the acoustic wave as shown by serpentine arrow 39. The diffracted light from the modulator 38 is reflected off of folding mirror 40, impinges on relay optic lens 47 and reflects off of folding mirror 42 after which it enters rotating dove prism 44. Dove prism 44 rotates about axis 45. After being reflected by folding mirrors 46 and 48 the light is collimated by collimating lens 50.

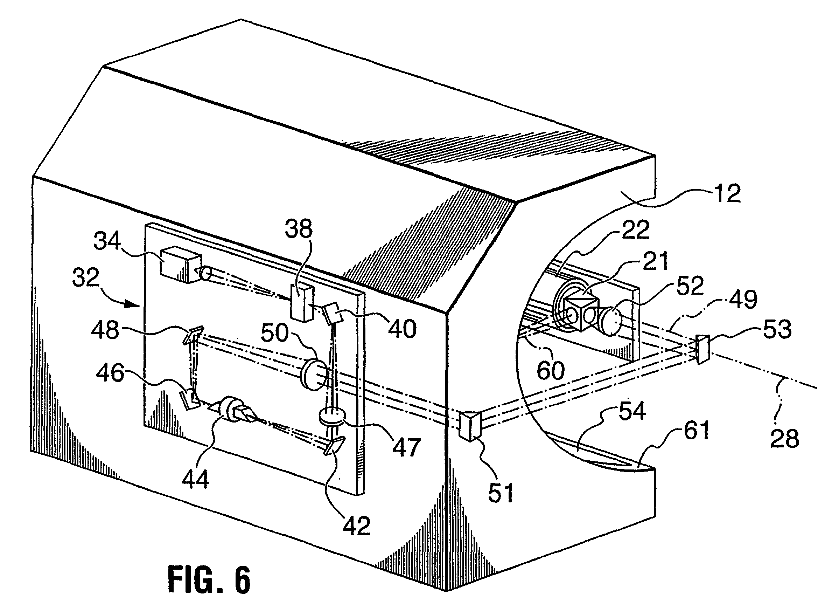

Referring to Figure 6, the collimated beam from the optical source assembly 32 is directed along the axis of the cylinder 12 by reflection off of folding mirrors 51 and 53. After reflection off of mirror 53 the light passes through objective lens 52 onto rotating scan prism 21. Scan prism 21 is fixed at 45 degrees relative to its axis of rotation 28 and to the direction of the light beam 49 incident thereon. Scan prism 21 reflects the light radially, and normal to the interior surface 61 of cylinder 12. Objective lens 52 is positioned in front of the spindle 22 so that the focal position of the light beam 60 coincides with the surface of the recording medium 54 (see also Fig. 5) which is mounted against the interior surface 61 of cylinder 12.

As the scan prism 21 rotates, the resulting scanned focused light beam 60 scribes a circular arc of constant velocity on the recording medium 54 when mounted against the interior surface 61 of the cylinder 12. The carriage assembly 24 (see Figure 4) is then translated along the cylinder axis 28 by means of a motorized mechanical actuator (notshown), at a rate equal to a single raster pitch spacing per rotation of prism 21, to affect complete exposure coverage of the recording medium 54.

After passing through objective lens 52, the light impinges on rotating scan prism 21 which scans the light 60 in raster bands perpendicular to the axis of rotation of scan prism 21. Rotating dove prism 44 rotates at one-half the rate of rotation of scan prism 21 and compensates for rotation of the image by the scanning process. The phase of rotation of the dove prism 44 is maintained relative to the phase of rotation of the scan prism 21 so that the long axis of the beam stripe 41 (see Fig. 7) at the inner cylindrical surface 61 of the recording medium 54 is parallel to the direction of scanning along the surface of that medium.

Referring now to Figure 7, the operation of the optical source assembly 32 is shown schematically. The acoustic wave in the acousto-optic modulator 38 is shown having a velocity $v_a$ in the direction shown by serpentine arrow 39. The acoustic wave diffracts a fraction of the incident light by an amount which depends upon its amplitude. The amplitude modulation of the wave as produced by an RF driving signal from RF generator **33** spatially modulates the light from source **34**. The first order diffracted beam passes through a spatial filter **43** which filters out the higher diffraction orders to allow only the first diffraction order to fill the system aperture. The result is optical modulation controlled by the amplitude of the RF drive level. At any point in time there are a number of acoustic pixel elements **29** within the length of the beam stripe **41** which is revealed once the diffracted beam is separated. With the diffracted beam having passed through the dove prism **44** and focused by collimating lens **50** and objective lens **52** onto rotating prism **31,** and scanned along a recording surface **54**, the pixels **29** are shifted with time within the beam stripe in the direction **37**. By scanning in the opposite direction **21** so that the speed of scanning at the recording plane **54** is equal but opposite to that of shifting, the pixels appear motionless on the recording surface **54**. This is in contrast to a conventional internal drum scanning system where a single spot is modulated in intensity as it is scanned. The resultant exposure time of such a system, at any point along the scan line, will be extended by the number of image pixels that can be resolved over the length of the laser stripe **41**.

The laser diode assembly **34** radiates from a slit-shaped aperture, shown to be oriented parallel to the mounting plane. The output power level is held constant throughout the imaging process, to provide stable illumination of the optical system. The source coupling optics **36** collect the laser light and form an image of the laser aperture at the plane of the modulator **38**, typically with a large magnification ratio. The coupling optics **36** may also provide other beam shaping functions such as compensation for source astigmatism.

The acousto-optic modulator **38** consists of an optically active crystal, such as lead molybdate, with a piezo-electric transducer bonded to one face. When the transducer is excited by an RF electrical signal from RF driver **33**, it will launch an ultra-sonic acoustic wave through the bulk of the crystal. The acoustic waves modulate the optical density as they propagate through the crystal, and the resulting phase grating will diffract incident light. Coherent, monochromatic light beams are split up into discrete diffraction orders, which can be spatially filtered to allow only one particular diffraction order to fill the system aperture, while all others are blocked. The result is optical modulation controlled by the amplitude of the RF drive level.

The length of the projected stripe of laser light, at the modulator crystal **38**, is many times broader than a single acoustic pixel spacing, working at the intended data pixel bandwidth. The spatial period of a single acoustic pixel is determined by the acoustic velocity and data clock period, as follows:

$$delta_a = mu_a * Tau$$

where:

> $delta_a$ is the acoustic spatial period
> $mu_a$ is the acoustic velocity of the crystal material
> Tau is the data clock period

This means that at any point in time during the imaging process, the length of the light stripe **41** will illuminate a number of acoustic pixel elements. The acoustic pattern is an analog representation of the amplitude modulation of the RF drive form. The diffracted light is therefore modulated spatially, as well as temporally, and forms a real image which is then projected on to the recording plane **54**.

The relay optics **47** are used to form a subsequent beam waist at the rotating dove prism **44**, which causes the image of the spatially modulated laser stripe to rotate, at twice the rate of the prism rotation. The dove prism **44** is rotated at half the rate of the final scan deflector **31**, so that the orientation between the long axis of the laser stripe **41** and surface of the scan deflector **31** is maintained constant. This results in a projected image of the laser stripe **41**, at the recording plane **54**, that does not rotate along the scan line. The phase angle between the long axis of the laser stripe and the reflective surface of the scan prism **21** remains constant, and the relative position determines the orientation of the projected stripe **41** relative to the scan direction.

The phase angles of both the scan prism **21** and rotating dove prism **44** are determined electronically by means of optical encoders (not shown), attached to the respective rotors for the scan prism **21** and the rotating prism **44**. The encoders each consist of a glass disc with an opaque, fine pitched radial grating, patterned on its surface. A thin beam of light is projected through the grating, which chops the light beam, and generates a tachometer clock signal at the opposing optical detector. A secondary marking and optical transceiver pair (not shown) generate a phase index clock, once per rotation. The tachometer and phase index signals are processed using phase locking circuitry to generate drive waveforms which synchronize the rotations of the two rotors. The phase difference can be controlled electronically, and is aligned so that the projected laser stripe **41** at the recording plane **54** is aligned parallel to the scan direction.

The Scophony velocity matching condition constrains the scan rate, depending only on the acoustic velocity of the modulator crystal **38** and the magnification of the optical system. The scan rate of the present invention is controlled by electronically tuning the rotation rate of the scan prism **21**. A tachometer signal generated by a spindle encoder in tachometer **25** shown in Figure **4** is used to phase lock the drive waveform to a precision tunable crystal oscillator (not shown). That tachometer signal is also used to synchronize the modulation of the pixel data, necessary to accurately place the pixels **29** along the scan line.

Finally, the collimation lens **50** is used to contain the beam divergence, and deliver a parallel beam of light to the final focusing objective **52**. A collimated beam is necessary so that the final focus position remains at the recording plane **54** throughout the travel of the carriage assembly **24**. The light beam **60** is directed on to the cylinder axis and scan mirror **21** by means of folding mirrors **51** and **53** so that the optical source assembly **32** can be mounted on the rear of the cylinder body **12**.

Referring to Figure **8** an alternative light source **62** consists of a linear stacked array of electrically isolated laser diodes **55** each of which are individually addressable. Light output from diodes **55** passes through an elongated generally rectangular aperture **59**. Each diode is coupled by an address line **57** through a delay **56** to an input line **58** so that the light output can be modulated by varying the turn-on time of each of the lasers **55**. Thus, by using the light source **62** of Figure 8, one can eliminate the need for a separate modulator and instead modulate the light by simply varying the delay to each of the individual laser diodes in the array.

Obviously, a linear stacked array of laser diodes could be used in place of the laser diode assembly **34**.

Obviously, other types of optical devices could be used to rotate the image other than a dove prism. For example, a Paschen prism or K prism could accomplish the same effect.

Accordingly, while this invention has been described with reference to illustrative embodiments, this description is not intended to be construed in a limiting sense. Various modifications of the illustrative embodiments, as well as other embodiments of the invention, will be apparent to persons skilled in the art upon reference to this description. It is therefore contemplated that the appended claims will cover any such modifications or embodiments as fall within the true scope of the invention.

**Claims**

1. An optical recording and data processing system for exposing an image onto a flexible, light sensitive image recording medium, comprising:

    (a) a medium holder having an inner cylindrical wall portion against which is held the image recording medium;

    (b) a light source which emits a beam of light from an approximately rectangular emitting aperture, said rectangular emitting aperture having a short aperture axis and a long aperture axis;

    (c) a spatial modulator positioned to intercept the beam of light from said light source and operative to produce a time varying spatially modulated pattern which shifts across the length of said long aperture axis at a substantially constant rate;

    (d) a rotating beam deflector positioned in the path of said beam of light and rotated so as to produce a rotating spatially modulated pattern;

    (e) a scanning deflector rotating about an axis aligned with an axis of an interior cylindrical surface at a rate of rotation equal to a rate of rotation of said spatially modulated pattern and aligned to an axis of said beam of light so as to deflect said beam of light substantially orthogonal to said axis to provide a scanning motion around an inner circumference of said image recording medium;

    (f) a scanning deflector advancement assembly coupled to said scanning deflector and operative to advance said scanning deflector, after scanning a row, to an adjacent row to enable scanning of the adjacent row; and

    (g) optical focusing components, positioned in a path of said beam of light between said spatial modulator and said interior cylindrical surface, operative to focus said beam of light and project an image of said spatially modulated pattern onto said image recording medium;

    wherein orientation of the projected image of said spatially modulated pattern on said image recording medium is maintained parallel to a direction of said scanning motion such that a direction of movement of the projected image due to the shifting is parallel to the scanning motion, but opposite in direction; and

    wherein said optical focusing components provide an optical magnification factor equal to a ratio of the scan velocity at image recording medium divided by a shifting velocity of said spatially modulated pattern whereby a scanning velocity at said image recording medium produced by rotation of said scanning deflector is equal to but opposite in direction to the shifting velocity of said spatially modulated pattern so as to maintain said pattern stationary on said image recording medium during exposure.

2. A system according to claim 1, wherein said light source is a linear array of individual lasers individually addressable for spatially modulating said light beam and including a plurality of delays coupled to respective ones of said lasers wherein each delay is different from the other of said delays and including a signal generator so as to cause the light from said lasers to be spatially modulated and to shift the modulation pattern.

3. A system according to claim 1, wherein said spatial modulator is an optical modulator which spatially modulates light from said light source and shifts the modulation pattern.

4. A system according to claim 1, wherein said optical modulator is an acousto-optic modulator and wherein said optical focusing components form a rectangular beam waist having a long axis corresponding to the long axis of the emitting aperture.

5. A system according to claim 1, wherein said scanning deflector is a mirror surface oriented at 45 degrees to a direction of incidence of light traveling along said axis.

6. A system according to claim 1, wherein said light source is a laser diode.

7. A system according to claim 1, wherein said rotating beam deflector which rotates said spatially modulated pattern is a dove prism rotating at half the angular velocity of said scanning deflector.

8. A system according to claim 1, wherein said scanning deflector advancement assembly advances said scanning deflector along said axis at a rate equal to one image track spacing per integer number of scan rotations.

9. An internal drum raster optical recorder having a flexible image recording medium mounted against an inner cylindrical mounting surface, comprising:

(a) a laser diode light source optically coupled to produce a beam of light having an elongated rectangular beam waist, said beam waist having a long axis along a long dimension of said beam waist and a short axis along a short dimension of said beam waist;

(b) an acousto-optic modulator crystal positioned so that an acoustic propagation direction is aligned to intercept said beam of light along the long axis thereof and operative to modulate said beam of light in response to a modulating signal and to produce an image of said modulating signal which shifts in a direction of acoustic travel;

(c) a rotating dove prism positioned to intercept and rotate said image of said modulating signal;

(d) means for directing said beam of light along an axis of said inner cylindrical mounting surface;

(e) an optical mirror surface oriented at 45 degrees to the axis of said inner cylindrical mounting surface, affixed to a spindle rotating on said axis, so as to deflect said beam of light radially to provide a scanning motion around an inner circumference of said recording medium;

(f) an advancement assembly coupled to said spindle and operative to advance said rotating spindle along said axis at a rate equal to one image track spacing per integer number of scan rotations; and

(g) an optical system positioned in a path of said beam of light between said acousto-optic modulator and said image recording medium, operative to project an image of said modulating signal onto said image medium;

wherein orientation of the modulated image pattern on the recording medium is maintained parallel to a direction of scanning of said modulated image pattern such that a direction of movement of the image due to shifting is parallel to scanning motion, but opposite in direction thereto; and

wherein said optical system provides an optical magnification equal to a ratio between an acoustic velocity of the acousto-optic modulator crystal and a scanning velocity at said recording medium whereby the scanning velocity along said image recording medium produced by rotation of said optical mirror is equal in magnitude but opposite in direction to a velocity of shifting movement of pixels within said image so as to maintain said modulated image pattern stationary during exposure of said image recording medium.

**Patentansprüche**

1. Optisches Aufzeichnungs- und Datenverarbeitungssystem zum Aufzeichnen eines Bildes auf ein flexibles, lichtempfindliches Bildaufzeichnungsmedium, aufweisend:

(a) einen Medienhalter mit einem inneren zylindrischen Wandabschnitt, gegen den das Bildaufzeichnungsmedium gehalten wird;
(b) eine Lichtquelle, die einen Lichtstrahl von einer etwa rechteckigen Emissionsöffnung aussendet, wobei die rechteckige Emissionsöffnung eine kurze Öffnungsachse und eine lange Öffnungsachse aufweist;
(c) einen Ortsmodulator, der dafür angeordnet ist, den Lichtstrahl von der Lichtquelle zu schneiden, und dafür ausgelegt ist, einen zeitlich variierendes räumlich moduliertes Muster zu erzeugen, das entlang der Länge der langen Öffnungsachse mit einer im Wesentlichen konstanten Geschwindigkeit verschoben wird;

(d) einen rotierenden Strahlablenker, der im Weg des Lichtstrahls angeordnet ist und so gedreht wird, dass ein rotierendes räumlich moduliertes Muster erzeugt wird;

(e) einen Abtastungsablenker, der sich um eine Achse, die mit einer Achse der inneren zylindrischen Oberfläche ausgerichtet ist, mit einer Rotationsgeschwindigkeit dreht, die gleich der Rotationsgeschwindigkeit des räumlich modulierten Musters ist, und der mit einer Achse des Lichtstrahls ausgerichtet ist, so dass er den Lichtstrahl im Wesentlichen senkrecht zur der Achse ablenkt, um eine Abtastbewegung um einen inneren Umfang des Bildaufzeichnungsmediums herum bereitzustellen;

(f) eine Vorschubeinheit für den Abtastungsablenker, die an den Abtastungsablenker gekoppelt und dafür ausgelegt ist, den Abtastungsablenker nach dem Abtasten einer Reihe zu einer benachbarten Reihe zu verschieben, um das Abtasten der benachbarten Reihe zu ermöglichen; und

(g) optische Fokussierungskomponenten, die in dem Weg des Lichtstrahls zwischen dem Ortsmodulator und der inneren zylindrischen Oberfläche angeordnet und dafür ausgelegt sind, den Lichtstrahl zur fokussieren und ein Bild des räumlich modulierten Musters auf das Bildaufzeichnungsmedium zu projizieren;

wobei die Ausrichtung des projizierten Bildes des räumlich modulierten Musters auf dem Bildaufzeichnungsmedium parallel zur Richtung der Abtastbewegung gehalten wird, so dass die Bewegungsrichtung des projizierten Bildes aufgrund der Verschiebung parallel zur Abtastbewegung ist, jedoch dieser entgegengerichtet; und

wobei die optischen Fokussierungskomponenten einen optischen Vergrößerungsfaktor liefern, der gleich dem Verhältnis der Abtastgeschwindigkeit beim Bildaufzeichnungsmedium dividiert durch die Verschiebungsgeschwindigkeit des räumlich modulierten Musters ist, wodurch die Abtastgeschwindigkeit beim Bildaufzeichnungsmedium, die durch Rotation des Abtastungsablenkers erzeugt wird, gleich der Verschiebungsgeschwindigkeit des räumlich modulierten Musters, dieser jedoch entgegengerichtet ist, so dass das Muster während des Aufzeichnens auf dem Bildaufzeichnungsmedium stationär gehalten wird.

2. System nach Anspruch 1, **dadurch gekennzeichnet, dass** die Lichtquelle eine lineare Anordnung individueller Laser ist, die individuell ansteuerbar sind, um den Lichtstrahl räumlich zu modulieren, und die eine Anzahl an Verzögerungselementen aufweisen, die an jeweilige der Laser gekoppelt sind, wobei jedes Verzögerungselement von den anderen Verzögerungselementen verschieden ist und einen Signalgenerator umfasst, um zu bewirken, dass das Licht der Laser ortsmoduliert wird und das Modulationsmuster verschoben wird.

3. System nach Anspruch 1, **dadurch gekennzeichnet, dass** der Ortsmodulator ein optischer Modulator ist, der Licht aus der Lichtquelle räumlich moduliert und das Modulationsmuster verschiebt.

4. System nach Anspruch 1, **dadurch gekennzeichnet, dass** der optische Modulator ein akusto-optischer Modulator ist und dass die optischen Fokussierungskomponenten eine rechteckige Strahltaille bilden, deren langen Achse der langen Achse der emittieren Öffnung entspricht.

5. System nach Anspruch 1, **dadurch gekennzeichnet, dass** der Abtastungsablenker eine Spiegeloberfläche ist, die um 45 Grad zur Richtung des einfallenden Lichts geneigt ist, das sich entlang der Achse fortpflanzt.

6. System nach Anspruch 1, **dadurch gekennzeichnet, dass** die Lichtquelle eine Laserdiode ist.

7. System nach Anspruch 1, **dadurch gekennzeichnet, dass** der rotierende Strahlablenker, der das räumlich modulierte Muster dreht, ein Schwalbenschwanzprisma ist, das mit der halben Winkelgeschwindigkeit des Abtastungsablenkers rotiert.

8. System nach Anspruch 1, **dadurch gekennzeichnet, dass** die Vorschubeinheit des Abtastungsablenkers den Abtastungsablenker entlang der Achse mit einer Geschwindigkeit vorschiebt, die gleich einem Bildspurabstand pro ganzer Zahl an Abtastungsdrehungen ist.

9. Innentrommel-Rasteraufzeichnungsgerät mit einem flexiblen Bildaufzeichnungsmedium, das an einer inneren zylindrischen Anbringungsoberfläche angebracht ist, aufweisend:

(a) eine Laserdioden-Lichtquelle, die optisch gekoppelt ist, um einen Lichtstrahl mit einer länglichen rechteckigen Strahltaille zu erzeugen, wobei die Strahltaille eine lange Achse entlang einer Längsabmessung der Strahltaille und eine kurze Achse entlang einer kurzen Abmessung der Strahltaille aufweist;

(b) einen akusto-optischen Modulatorkristall, der so angeordnet ist, dass die akustische Ausbreitungsrichtung so ausgerichtet ist, dass sie den Lichtstrahl entlang dessen Längsachse schneidet, und der dafür ausgelegt ist, den Lichtstrahl als Antwort auf ein Modulationssignal zu modulieren und ein Bild des Modulationssignals zu erzeugen, das in die akustische Ausbreitungsrichtung verschoben wird;

(c) ein rotierendes Schwalbenschwanzprisma, das dafür angeordnet ist, das Bild des Modulationssignals zu schneiden und zu drehen;

(d) Mittel zum Lenken des Lichtstahls entlang einer Achse der inneren zylindrischen Anbringungsoberfläche;

(e) eine optische Spiegeloberfläche, die um 45 Grad zur Achse der inneren zylindrischen Anbringungsoberfläche ausgerichtet und an einer Spindel, die sich auf der Achse dreht, befestigt ist, so dass sie den Lichtstrahl radial ablenkt, um eine Abtastbewegung um einen inneren Umfang des Aufzeichnungsmediums herum bereitzustellen;

(f) eine Vorschubeinheit, die an die Spindel gekoppelt und dafür ausgelegt ist, die rotierende Spindel entlang der Achse mit einer Geschwindigkeit zu verschieben, die gleich einem Bildspurabstand pro ganzer Zahl an Abtastrotationen ist; und

(g) ein optisches System, das in dem Weg des Lichtstrahls zwischen dem akusto-optischen Modulator und dem Bildaufzeichnungsmedium angeordnet und dafür ausgelegt ist, ein Bild des modulierenden Signals auf das Bildmedium zu projizieren;

wobei die Ausrichtung des modulierten Bildmusters auf dem Aufzeichnungsmedium parallel zur Abtastrichtung des modulierten Bildmusters gehalten wird, so dass die Bewegungsrichtung des Bildes aufgrund der Verschiebung parallel zur Abtastbewegung ist, dieser jedoch entgegengerichtet; und

wobei das optische System eine optische Vergrößerung bereitstellt, die gleich dem Verhältnis zwischen der akustischen Geschwindigkeit des akusto-optischen Modulatorkristalls und der Abtastgeschwindigkeit bei dem Aufzeichnungsmedium ist, wodurch die Abtastgeschwindigkeit entlang dem Bildaufzeichnungsmedium, die durch die Rotation des optischen Spiegels erzeugt wird, die gleiche Größe wie die Geschwindigkeit der Verschiebungsbewegung von Pixeln innerhalb des Bildes aufweist, dieser jedoch entgegengerichtet ist, so dass das modulierte Bildmuster während des Belichtens des Bildaufzeichnungsmediums stationär gehalten wird.

**Revendications**

1. Système d'enregistrement optique et de traitement de données pour exposer une image sur un support d'enregistrement d'image flexible, réagissant à la lumière, comprenant :

(a) un support pour le support d'enregistrement comportant une portion de paroi cylindrique interne contre laquelle est tenu le support d'enregistrement d'image ;

(b) une source de lumière qui émet un faisceau de lumière à partir d'une ouverture d'émission approximativement rectangulaire, ladite ouverture d'émission rectangulaire ayant un axe d'ouverture court et un axe d'ouverture long ;

(c) un modulateur spatial positionné pour intercepter le faisceau de lumière de ladite source de lumière et fonctionnant pour produire un modèle variant dans le temps, modulé spatialement qui se déplace sur la longueur dudit axe d'ouverture long à une vitesse sensiblement constante ;

(d) un déflecteur de faisceau tournant positionné dans le chemin dudit faisceau de lumière et tourner de façon à produire un modèle tournant, spatialement modulé ;

(e) un déflecteur de balayage tournant autour d'un axe aligné avec un axe d'une surface cylindrique intérieure à une vitesse de rotation égale à une vitesse de rotation dudit modèle spatialement modulé et aligné avec un axe dudit faisceau de lumière de façon à dévier ledit faisceau de lumière d'une manière sensiblement orthogonale audit axe afin de réaliser un mouvement de balayage autour d'une circonférence interne dudit support d'enregistrement d'image ;

(f) un ensemble d'avancement de déflecteur de balayage couplé audit déflecteur de balayage et fonctionnant pour faire avancer ledit déflecteur de balayage, après le balayage d'une rangée, à une rangée adjacente pour permettre le balayage de la rangée adjacente ; et

(g) des composants de focalisation optiques, positionnés dans un chemin dudit faisceau de lumière entre ledit modulateur spatial et ladite surface cylindrique intérieure, fonctionnant pour focaliser ledit faisceau de lumière et pour projeter une image dudit modèle spatialement modulé sur ledit support d'enregistrement d'image ;

où l'orientation de l'image projetée dudit modèle spatialement modulé sur ledit support d'enregistrement d'image est maintenue parallèle à une direction dudit mouvement de balayage de façon qu'une direction de mouvement de l'image projetée par suite du déplacement soit parallèle au mouvement de balayage, mais opposée en direction ; et

où lesdits composants de focalisation optiques fournissent un facteur de grossissement optique égal à un rapport de la vitesse de balayage au support d'enregistrement d'image divisé par une vitesse de déplacement dudit modèle spatialement modulé, par quoi une vitesse de balayage audit support d'enregistrement d'image produite par la rotation dudit déflecteur de balayage est égale, mais opposée en direction, à la vitesse de déplacement dudit modèle spatialement modulé de façon à maintenir ledit modèle stationnaire sur ledit support d'enregistrement d'image pendant l'exposition.

2.  Système selon la revendication 1, où ladite source de lumière est une rangée linéaire de lasers individuels pouvant être adressés individuellement pour moduler spatialement ledit faisceau de lumière et comportant plusieurs délais couplés à des lasers respectifs, où chaque délai diffère de l'autre desdits délais et incluant un générateur de signaux de manière à amener la lumière desdits lasers à être modulée spatialement et à déplacer le modèle de modulation.

3.  Système selon la revendication 1, où ledit modulateur spatial est un modulateur optique qui module spatialement la lumière de ladite source de lumière et déplace le modèle de modulation.

4.  Système selon la revendication 1, où ledit modulateur optique est un modulateur acousto-optique, et où lesdits composants de focalisation optiques forment une ceinture de faisceau rectangulaire comportant un axe long correspondant à l'axe long de l'ouverture d'émission.

5.  Système selon la revendication 1, où ledit déflecteur de balayage est une surface de miroir orientée selon 45 degrés à une direction d'incidence de la lumière se déplaçant le long dudit axe.

6.  Système selon la revendication 1, où ladite source de lumière est une diode à laser.

7.  Système selon la revendication 1, où ledit déflecteur de faisceau tournant qui fait tourner ledit modèle spatialement modulé est un prisme d'aronde tournant à la moitié de la vitesse angulaire dudit déflecteur de balayage.

8.  Système selon la revendication 1, où ledit ensemble d'avancement de déflecteur de balayage fait avancer ledit déflecteur de balayage le long dudit axe à une vitesse égale à un espacement de piste d'image par nombre entier de rotations de balayage.

9.  Enregistreur optique tramé à tambour interne comportant un support d'enregistrement à image flexible monté contre une surface de montage cylindrique interne, comprenant :

(a) une source de lumière de diode à laser couplée optiquement pour produire un faisceau de lumière présentant une ceinture de faisceau rectangulaire oblongue, ladite ceinture de faisceau ayant un axe long dans la dimension longue de ladite ceinture de faisceau et un axe court le long d'une dimension courte de ladite ceinture de faisceau ;

(b) un cristal de modulateur acousto-optique positionné de façon qu'une direction de propagation acoustique soit alignée pour intercepter ledit faisceau de lumière le long de l'axe long de celui-ci et fonctionnant pour moduler ledit faisceau de lumière en réponse à un signal de modulation et pour produire une image dudit signal de modulation qui se déplace dans une direction de progression acoustique ;

(c) un prisme d'aronde tournant positionné pour intercepter et faire tourner ladite image dudit signal de modulation ;

(d) un moyen pour diriger ledit faisceau de lumière le long d'un axe de ladite surface de montage cylindrique interne ;

(e) une surface de miroir optique orientée selon 45 degrés à l'axe de ladite surface de montage cylindrique interne, fixée à une broche tournant sur ledit axe de manière à dévier ledit faisceau de lumière radialement pour produire un mouvement de balayage autour d'une circonférence interne dudit support d'enregistrement ;

(f) un ensemble d'avancement couplé à ladite broche et fonctionnant pour faire avancer ladite broche tournante le long dudit axe à une vitesse égale à un espacement de piste d'image par nombre entier de rotations de balayage ; et

(g) un système optique positionné dans un chemin dudit faisceau de lumière entre ledit modulateur acousto-optique et ledit support d'enregistrement d'image, fonctionnant pour projeter une image dudit signal de modulation sur ledit support d'image ;

où l'orientation du modèle d'image modulé sur le support d'enregistrement est maintenue parallèle à une direction de balayage dudit modèle d'image modulé de façon qu'une direction de mouvement de l'image par suite du déplacement soit parallèle au mouvement de balayage, mais dans une direction opposée à celui-ci ; et

où ledit système optique réalise un grossissement optique égal à un rapport entre une vitesse acoustique du cristal de modulateur acousto-optique et une vitesse de balayage audit support d'enregistrement par quoi la vitesse de balayage le long dudit support d'enregistrement d'image produite par la rotation dudit miroir optique est égale en grandeur mais opposée en direction à une vitesse du mouvement de déplacement d'éléments d'image dans ladite image de façon à maintenir ledit modèle d'image modulé stationnaire pendant l'exposition dudit support d'enregistrement d'image.

FIG. 1

FIG. 2

FIG. 3

**FIG. 4**

FIG. 5

**FIG. 6**

**FIG. 7**

**FIG. 8**